# EUROPÄISCHE PATENTSCHRIFT

(11) **EP 2 868 600 B1**
(45) Veröffentlichungstag und Bekanntmachung des Hinweises auf die Patenterteilung: **06.12.2017**
(21) Anmeldenummer: 14190757.6
(22) Anmeldetag: 28.10.2014
(51) Int. Cl.: B65G 1/04

(54) **Magazin und Magazinierverfahren**
Storage and storage method
Magasin et procédé de magasinage

(30) Priorität: 29.10.2013 DE 202013104840 U
(43) Veröffentlichungstag der Anmeldung: 06.05.2015
(73) Patentinhaber: KUKA Systems GmbH, 86165 Augsburg (DE)
(72) Erfinder: Fischer, Wolfgang, 86199 Augsburg (DE); Proksch, Karl-Heinz, 86167 Augsburg (DE)
(74) Vertreter: Ernicke, Klaus Stefan

(56) Entgegenhaltungen:
- EP-A1- 1 627 829
- EP-A2- 0 462 533
- EP-A2- 1 873 045
- EP-A2- 2 511 044
- DE-U1- 20 205 693
- FR-A5- 2 115 764
- JP-U- H0 395 308

## Beschreibung

Die Erfindung betrifft ein Magazin für Bauteilträger nach dem Oberbegriff des Anspruchs 1. Die Erfindung betrifft ferner ein Logistiksystem mit einem solchen Magazin, eine Fertigungsanlage mit einem solchen Magazin sowie ein Verfahren zum Magazinieren von Bauteilen mit einem solchen Magazin. Aus der Praxis sind Magazine bekannt, die aus mehreren in einer oder mehreren geraden Linien aufgereihten stationären Traggestellen bestehen, die jeweils einen oder mehrere Bauteilträger mit darin positionierten Bauteilen, insbesondere Karosseriebauteilen, aufnehmen.

Das Dokument EP 2 511 044 A2 offenbart ein Magazin für Bauteilträger nach dem Oberbegriff des Anspruchs 1. Es ist Aufgabe der vorliegenden Erfindung, die Magazintechnik zu verbessern.

Die Erfindung löst diese Aufgabe mit einem Magazin nach Anspruch 1. Die beanspruchte Magazintechnik, d.h. das Magazin und das zugehörige Magazinierverfahren, haben den Vorteil einer höheren Aufnahme- und Leistungskapazität als vorbekannte Magazine, wobei zugleich signifikant Platz, insbesondere Grundfläche, gespart werden kann. Dieser kann für andere Zwecke, z.B. für eine Vorkommissionierung, genutzt werden. Die beanspruchte Magazintechnik erlaubt ferner eine Verkürzung und Vereinheitlichung der Transportwege, insbesondere von den Speicherplätzen im Magazin zu einer angeschlossenen Fertigungslinie. Dies führt zu einem besser planbaren Ablauf bei der Logistik der Bauteilträger und der Bauteile in der Zuführung zu einer Fertigungslinie. Außerdem können die Zahl und der Platzbedarf der Logistikzugänge zum Magazin reduziert werden. Andererseits ist es möglich, durch eine Mehrfachanordnung von Entladevorrichtungen die Leistungsfähigkeit der Logistik zu verbessern. Besondere Vorteile ergeben sich bei Einsatz eines mehrachsigen Industrieroboters für die Entladeeinrichtung. Dessen Auslastung kann verbessert und vergleichmäßigt werden. Insbesondere kann der Industrieroboter freie Zeitanteile zur Durchführung von Nebenaufgaben, z.B. Nachfüllen eines Pufferspeichers, haben. Er kann auch mehrere Drehspeicher im Magazin bedienen. Der Industrieroboter kann mit oder ohne einer zusätzlichen Fahrachse ausgebildet sein. Signifikant verbessert wird außerdem der Zeit- und Platzbedarf für das Zuführen beladener Bauteilträger zum Magazin und das Abführen leerer Bauteilträger. Das ermöglicht einen Wechsel von Bauteilträgern während eines Fertigungstaktes und reduziert das Erfordernis und die Größe eines Pufferspeichers für einzelne Bauteile.
Günstig ist außerdem die tangentiale Anfahrmöglichkeit zu einem Drehspeicher und dessen Beladestelle(n). Eine Sackgassenbildung und ein dadurch erhöhter Platzbedarf zum Rangieren und Wenden eines Fördermittels können vermieden werden.

Ein weiterer Vorteil ist die hohe Flexibilität des Magazins für Art und Anzahl sowie ggf. auch Größe der Bauteilträger. Auf den Drehtischen besteht hierfür ausreichend Platz. Andererseits kann durch die turmartige Ausbildung des Drehspeichers mit den mehreren aufgeschichteten Drehtischen signifikant Grundfläche gespart werden. Zudem ist ein paralleler Be- und Entladezugriff zu den mehreren Drehtischen und ihren Speicherplätzen möglich. Bei einer Mehrfachanordnung von Be- und Entladestellen können die Drehtische und deren Speicherplätze unabhängig voneinander und mit zeitlicher Überschneidung be- und entladen werden. Die eigenständige Lagerung und Antriebstechnik der Drehtische erhöht die Flexibilität zusätzlich.
Eine tangentiale Ausrichtung der Tischränder und die dortige Anordnung von jeweils ein oder mehreren Speicherplätzen hat den Vorteil einer Verkürzung der Zugriffswege zum Be- und Entladen der Speicherplätze bzw. der Bauteilträger und zur Entnahme einzelner Bauteile aus einem Bauteilträger. Dies erlaubt den Einsatz von Be- und Entladeeinrichtungen mit verkleinerter Reichweite und entsprechend geringerem Platzbedarf. Günstig sind auch die eröffneten Variationsmöglichkeiten für die technische Ausbildung von Be- und Entladeeinrichtungen. Für das Beladen bzw. das Zu- und Abführen von Bauteilträgern kann auch ein geeignetes Fördermittel, insbesondere ein Transportzug, eingesetzt werden. Zudem kann durch geeignete Ausbildung der Beladeeinrichtung mit einem Pufferplatz der Wechselvorgang beschleunigt werden.
Für die Automatisierung des Magazins und der angeschlossenen weiteren Anlagenteile ist eine exakte Positionierung der Drehtische zum Be- und Entladen von Vorteil. Hierdurch können auch negative Einflüsse und Verformungen durch Gewichtsverschiebungen und Laständerungen vermieden werden. Eine Abstützung erfolgt an den Be- und Entladestellen in der vertikalen Richtung. Zudem kann eine exakte und schnelle Drehpositionierung erreicht werden. Für das schnelle und genaue Zuführen eines Bauteilträgers auf einen Speicherplatz und das dortige exakte Positionieren ist eine entsprechende Führungs- und Positioniereinrichtung vorhanden, mit der auch die z.B. von einem Fördermittel, insbesondere einem Gabelstapler, ausgehenden Positionierungenauigkeiten ohne großen Aufwand wirksam kompensiert werden können.

Nachfolgend sind Merkmale von bevorzugten Ausführungsformen des Magazins, des Logistiksystems und der Fertigungseinrichtung genannt, die einzeln oder in beliebiger Kombination untereinander sowie ggf. in Kombination mit den Ansprüchen von Vorteil sind.

Die Drehtische können konzentrisch zu einer zentralen Drehachse angeordnet sein. In einer Ausgestaltung weisen die Drehtische im Bereich der Speicherplätze gerade und bevorzugt tangential ausgerichtete äußere Tischränder auf. Es kann außerdem vorgesehen sein, dass ein Drehtisch mehrere, insbesondere zwei in Tangentialrichtung nebeneinander angeordnete Speicherplätze aufweist. Günstig ist auch eine Anordnung der Speicherplätze über Kreuz an einem Drehtisch.

Eine Ausgestaltung der Erfindung sieht einen Drehtisch vor, der einen zentral abgestützten Tragrahmen aufweist, auf dem die Speicherplätze angeordnet sind. Ferner ist eine Drehtischausbildung vorteilhaft, bei der an einer Beladestelle und/oder an einer Entladestelle eine Positioniereinrichtung für die Drehstellung angeordnet ist.

Eine Beladeeinrichtung des Magazins kann als Fördermittel, insbesondere als Gabelstapler ausgebildet sein.

Das Magazin kann in einer Ausführung mehrere Drehspeicher mit einer gemeinsamen Entladeeinrichtung aufweisen. Eine oder mehrere Entladeeinrichtungen können an eine Fertigungslinie angeschlossen sein. Das Magazin kann auch an eine Vorkommissionierung für beladene Bauteilträger angeschlossen sein. Das Magazin kann ferner eine umgebende Schutzabtrennung, insbesondere einen Zaun, mit einem verschließbaren Zugang, insbesondere einem Rolltor, zu einer Beladestelle aufweisen.

Das Logistiksystem kann ein Fördermittel für leere und beladene Bauteilträger aufweisen. Es kann ferner an eine Fertigungslinie angeschlossen sein.
In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine schematische Draufsicht auf ein Magazin und weitere Teile eines Logistiksystems und einer Fertigungsanlage,
- Figur 2:: eine perspektivische Ansicht des Magazins von Figur 1,
- Figur 3:: eine Seitenansicht eines Drehspeichers des Magazins,
- Figur 4:: eine schematische Draufsicht auf einen Drehspeicher und mehrere Be- und Entladestellen und
- Figur 5:: eine Schemadarstellung eines Drehspeichers mit einer Beladeeinrichtung und einem Fördermittel.

Die Fertigungsanlage (1) dient zur Fertigung, insbesondere Herstellung von Werkstücken. Dies sind bevorzugt Fahrzeugkarosserien oder deren Baugruppen. Sie werden aus verschiedenen Bauteilen (7), insbesondere Karosseriebauteilen, aufgebaut, die über das Magazin (4) einer bevorzugt voll automatischen Fertigungslinie (2) zugeführt werden.

Die Fertigungsanlage (1) kann auch ein Logistiksystem (3) beinhalten, in dem das Magazin (4) einer von mehreren Bestandteilen ist. Das Logistiksystem (3) kann außerdem eine Vorkommissionierung (36) für die Bauteile (7) in mobilen Bauteilträgern (6) und ein Fördermittel (33) zum Transport der befüllten Bauteilträger (6) zum Magazin (4) und zum Rücktransport von leeren Bauteilträgern (6) beinhalten.

Die Bauteilträger (6) weisen geeignete und adaptierte Aufnahmen zur positionierten, insbesondere hinsichtlich der Position hochgenauen Platzierung der Bauteile (7) im Bauteilträger (6) auf. Die Bauteilträger (6) können z.B. als Racks für Seitenwände oder Seitenwandteilen einer Fahrzeugkarosserie ausgebildet sein, die im Rack einzeln mit gegenseitigem Abstand und positionsgenau gehalten sind.

Dem Magazin (4) werden die vollen Bauteilträger (6) zugeführt und durch gezielte Entnahme, insbesondere Einzelentnahme, der Bauteile (7) entladen, die dann der Fertigungslinie (2) übergeben werden. Das Magazin (4) arbeitet ebenfalls bevorzugt voll automatisch.

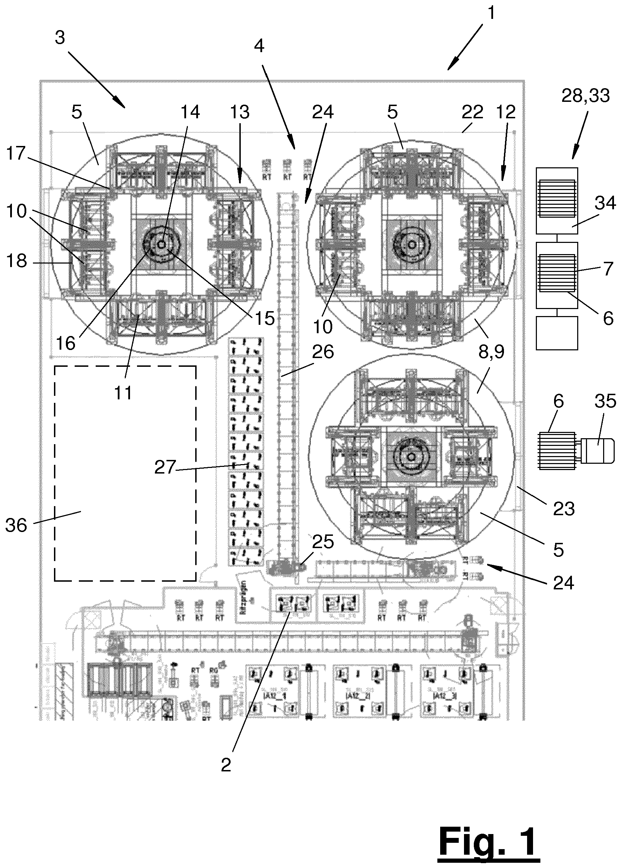

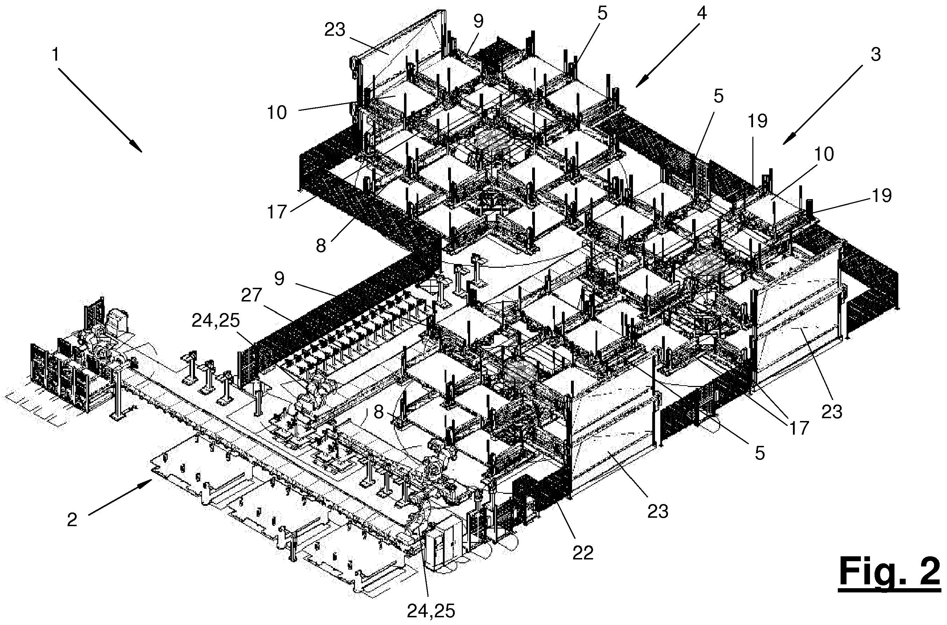

Das in Figur 1 und 2 dargestellte Magazin (4) weist einen oder mehrere Drehspeicher (5) für Bauteilträger (6) auf. Die Drehspeicher (5) können gleich oder unterschiedlich ausgebildet sein. Sie weisen jeweils mehrere Drehtische (8,9) auf, die mit Abstand übereinander angeordnet sind. Bevorzugt sind zwei oder drei Drehtische (8,9) in dieser Weise angeordnet. Deren Zahl kann auch größer sein.

Die Drehtische weisen jeweils am äußeren umfangseitigen Tischrand (18) mehrere Speicherplätze (10,11) für einen mobilen Bauteilträger (6) auf. Die Speicherplätze (10,11) sind in Umfangsrichtung verteilt angeordnet. Sie können gleiche oder unterschiedliche Formate, insbesondere Grundflächengrößen haben. Die im Format unterschiedlichen Speicherplätze (10,11) dienen zur Aufnahme unterschiedlich großer mobiler Bauteilträger (6), die ggf. auch eine unterschiedliche Ausrichtung am Speicherplatz (10,11) haben können.

Auch die Zahl und Anordnung der Speicherplätze auf den Drehtischen (8,9) in einem Drehspeicher (5) kann gleich oder unterschiedlich sein. Figur 1 zeigt z.B. bei den beiden oberen Drehspeichern (5) Drehtische (8,9) mit jeweils acht Speicherplätzen (10,11). Bei dem dritten Drehspeicher (5) sind sechs Speicherplätze (10,11) vorhanden.

Die Drehtische (8,9) sind konzentrisch zu einer zentralen und bevorzugt gemeinsamen Drehachse (14) angeordnet und sind fluchtend übereinander in der Vertikalen angeordnet. Die Drehtische (8,9) sind unabhängig voneinander drehbar gelagert und können eigenständig angetrieben und gesteuert werden. Antrieb und Lagerung können zentral und im Bereich der Drehachse (14) erfolgen. Die Drehtische (8,9) sind ringförmig ausgebildet und weisen eine zentrale Trageinrichtung (15) mit einem Drehlager (16) auf. Dies kann eine gemeinsame und z.B. säulenförmige Trageinrichtung (15) in zentraler Anordnung sein.

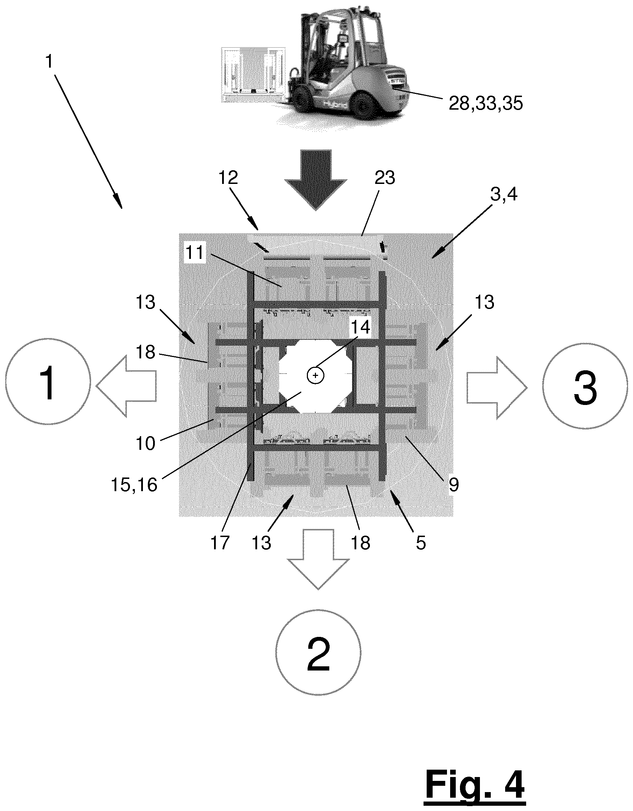

Wie Figur 1 und 4 in der Draufsicht verdeutlichen, haben die Drehtische (8,9) im Bereich der Speicherplätze (10,11) gerade äußere Tischränder (18), die bevorzugt tangential und in der Art von Sekanten ausgerichtet sind. Die z.B. in der Grundfläche rechteckigen Speicherplätze (10,11) schließen mit ihrem geraden Vorderrand bündig an den Tischrand (18) an und sind dadurch von der Frontseite her leicht und behinderungsfrei zugänglich.

Ein Drehtisch (8,9) kann gemäß Figur 1 mehrere in Tangentialrichtung nebeneinander angeordnete Speicherplätze (10,11) aufweisen. Vorzugsweise sind zwei Speicherplätze (10,11) nebeneinander angeordnet. Deren Zahl kann aber auch größer sein.

Die Speicherplätze (10,11) können einen Boden oder eine andere geeignete Aufnahme für einen mobilen Bauteilträger (6) aufweisen. Sie haben außerdem jeweils eine mit dem Bauteilträger (6) zusammenwirkende Führungs- und Positioniereinrichtung (19). Diese kann z.B. von seitlichen Führungsschienen und von einem rückseitigen Endanschlag gebildet werden, die den z.B. von der Frontseite her eingeschobenen oder eingehobenen Bauteilträger (6) seitlich und am Ende führen. Zum exakten Positionieren eines Bauteilträgers (6) können geeignete Positioniermittel, z.B. Konuszapfen und passende Aufnahmeöffnungen vorhanden sein, die beim Absenken des Bauteilträgers (6) ineinander greifen.

Die Speicherplätze (10,11) an einem Drehtisch (8,9) sind in geeigneter Weise mit umfangseitiger Verteilung angeordnet. Dies kann z.B. eine Kreuzanordnung gemäß Figur 1 und 4 sein. Insgesamt sind somit jeweils vier voneinander getrennte Bereiche mit Speicherplätzen (10,11) an jeweils einem Drehtisch (8,9) vorhanden. Die Bereichszahl und die Anordnung kann auch kleiner oder größer sein. Bei der gezeigten Kreuzanordnung sind die Speicherplätze (10,11) rechtwinklig zueinander ausgerichtet und können einander auch bereichsweise überlappen. Dies ist für die Raumausnutzung auf dem ringförmigen Tragbereich eines Drehtischs (8,9) von Vorteil.

Die Drehtische (8,9) weisen jeweils einen Tragrahmen (17) auf, auf dem die Speicherplätze (10,11) randseitig angeordnet sind. Der Tragrahmen (17) kann z.B. von kreuzweise angeordneten und verschweißten Stahlprofilen gebildet werden. Durch die Rahmenbildung aus schlanken Trägern wird Platz und Gewicht gespart. Zudem kann die Verformungsfestigkeit gezielt beeinflusst werden. Der jeweilige Tragrahmen (17) ist zentral abgestützt und gelagert, insbesondere an der vorgenannten säulenartigen Trageinrichtung (15) mit deren Drehlagern (16).
Der Drehtisch (8,9), insbesondere dessen Tragrahmen (17) ist mit einem Drehantrieb (nicht dargestellt) verbunden. Dieser ist an eine Steuerung, insbesondere eine Ablaufsteuerung, angeschlossen, die im Drehspeicher (5) integriert oder ggf. auch als übergeordnete Steuerung extern angeordnet sein kann. Sie ist außerdem mit der Anlagensteuerung der Fertigungsanlage (1) gekoppelt.

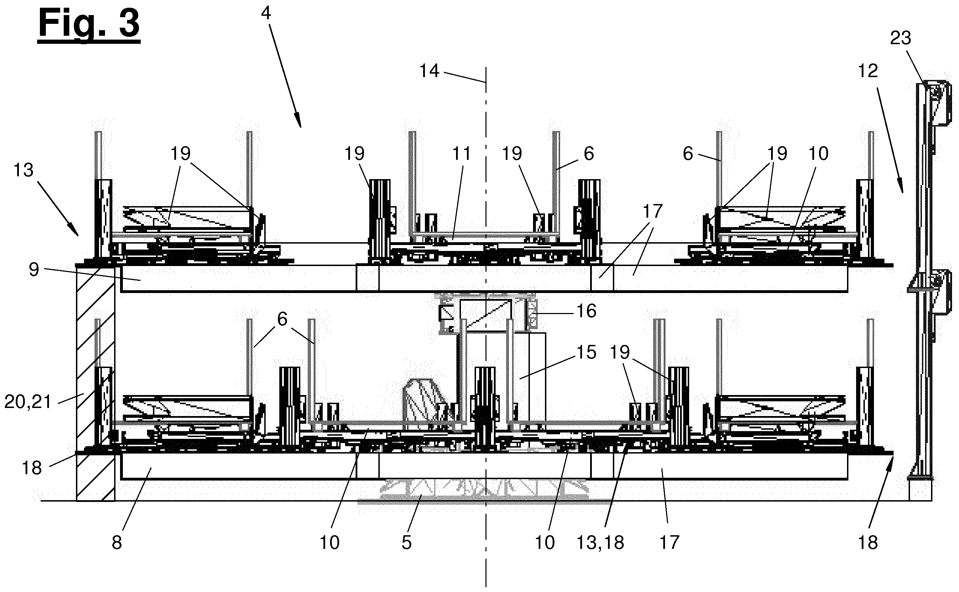

Wie Figur 3 und 4 verdeutlichen, weist das Magazin (4) für die Drehtische (8,9) jeweils mindestens eine Beladestelle (12) und mindestens eine Entladestelle (13) auf, die in Umfangsrichtung getrennt voneinander angeordnet sind. An der Beladestelle (12) werden gefüllte Bauteilträger (6) zugeführt und gegen leere Bauteilträger (6) getauscht. An einer Entladestelle (13) können die Bauteile (7) einzeln oder in Gruppen entnommen und die Bauteilträger (6) entladen werden.
Die Be- und Entladestellen (12,13) können für die Drehtische (8,9) in einem Drehspeicher (5) gemeinsam vorhanden sein, so dass wahlweise ein Ladezugriff zum unteren Drehtisch (8) oder zum oberen Drehtisch (9) besteht. Bei einer Mehrfachanordnung von Beladestellen (12) und/oder Entladestellen (13) können die Drehtische (8,9) gleichzeitig und an verschiedenen Stellen mit Bauteilträgern (6) beladen werden. Entsprechendes gilt für die Entladefunktion, wobei an beiden Drehtischen (8,9) gleichzeitig und an verschiedenen Stellen Bauteile (7) aus deren Bauteilträgern (6) entnommen werden können.

Mindestens ein Drehtisch (8,9), insbesondere ein oberer Drehtisch (9), weist an einer Beladestelle (12) und/oder an einer Entladestelle (13) eine randseitige vertikale Abstützung (21) auf. Diese sorgt für eine von Laständerungen am Drehtisch (8,9) unabhängige exakte Positionierung des oder der Speicherplätze (10,11) sowie der dortigen Bauteilträger (6) an der Be- oder Entladestelle (12,13). Die vertikale Abstützung (21) ist steuerbar und greift formschlüssig an einer entsprechenden Stelle des Drehtisches (8,9), insbesondere des Tragrahmens (17), an. Sie kann in der Vertikalen beidseitig wirken und auch ein Abheben verhindern.
Ein oder alle Drehtische (8,9) können an einer Beladestelle (12) und/oder an einer Entladestelle (13) eine Positioniereinrichtung (20) für die Drehstellung aufweisen. Diese kann z.B. als steuerbare Absteckung ausgebildet sein. Sie sorgt ebenfalls für eine exakte Positionierung des oder der Speicherplätze (10,11) und der darauf befindlichen Bauteilträger (6) an den besagten Stellen (12,13). Die vertikale Abstützung (21) und die Positioniereinrichtung (20) können getrennt angeordnet oder zu einer Baueinheit verbunden sein, wie dies schematisch in der Seitenansicht von Figur 3 dargestellt ist.
Das Magazin (4) und dessen ein oder mehrere Drehspeicher (5) können aus Sicherheitsgründen mit einer Schutzabtrennung (22) umgeben sein. Diese kann an den ein oder mehreren Beladestellen (12) jeweils einen verschließbaren Zugang (23) haben, der z.B. als Rolltor ausgebildet ist und von außen den Zugang zu einem einzelnen oder mehrfachen Speicherplatz (10,11) an einem oder mehreren Drehtischen (8,9) ermöglicht.

An einer Beladestelle (12) werden die Bauteilträger (6) an einem Speicherplatz (10,11) gewechselt. Hierfür kann eine Beladeeinrichtung (28) dauerhaft oder temporär ander Beladestelle (12) angeordnet sein. Hierfür gibt es verschiedene Ausgestaltungsmöglichkeiten.

Figur 1 bis 4 zeigen eine Beladeeinrichtung (28), die von einem Fördermittel (33) gebildet wird. Das Fördermittel (33) sorgt für einen Transport der vollen und der leeren Bauteilträger (6) von einer Vorkommissionierung (36) zum Magazin (4) und zurück. In der Vorkommissionierung (36) werden die Bauteile (7) in leere Bauteilträger (6) geladen und exakt positioniert. Die Bauteile (7) können dabei gleich oder unterschiedlich sein. Es kann sich um Einzelbauteile, z.B. Karosserieseitenwände oder um Gruppen von mehreren unterschiedlichen Bauteilen handeln.

Ein Fördermittel (33) kann unterschiedlich ausgebildet sein. Figur 1 zeigt verschiedene Varianten. Einerseits ist eine Ausbildung als Transportzug (34) möglich, der mehrere Bauteilträger (6) aufnehmen kann und der ggf. auch Pufferplätze für das kurzfristige Zwischenlagern eines Bauteilträgers (6) beim Wechsel aufweisen kann. Der Transportzug (34) kann mehrere gekoppelte Wagen aufweisen. Er kann als schienengebundenes oder induktiv oder auf andere Weise geführtes und ggf. mannloses Fahrzeug ausgebildet sein. Er kann ferner ein Lademittel (32), z.B. eine Teleskopgabel, zum Übergeben und Übernehmen von ein oder mehreren Bauteilträgern (6) an und von einem Speicherplatz (10,11) aufweisen.

In einer anderen Variante kann das Fördermittel (33) als Gabelstapler (35) ausgebildet sein, der mit seiner Hubgabel durch den Zugang (23) und direkt an die Beladestelle (12) und die Drehtische (8,9) fahren kann sowie den Behälterwechsel durchführen kann.

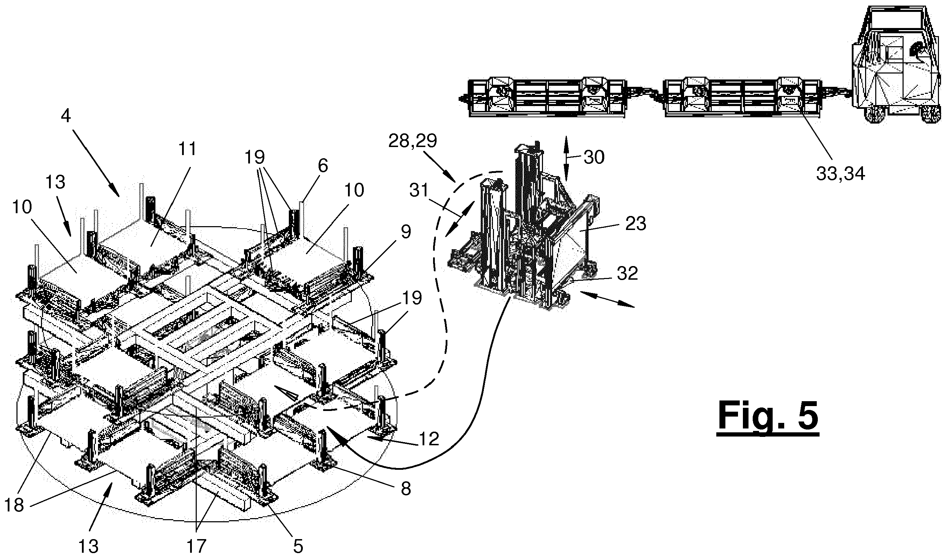

Figur 5 zeigt eine weitere Variante der Beladeeinrichtung (28), die hier eine ortsgebundene Wechseleinrichtung (29) für Bauteilträger (6) an der Beladestelle (12) aufweist. Die Wechseleinrichtung (29) weist eine Hubeinrichtung (30) zur Bedienung der unterschiedlichen hohen Drehtische (8,9) und ein Lademittel (32) auf zur Übernahme und Abgabe eines Bauteilträgers (6) von und an einen Speicherplatz (10,11) auf der einen Seite sowie von und an ein Transportmittel (33) auf der anderen Seite. Die Wechseleinrichtung (29) kann ggf. auch eine Zusatzachse (31) für eine horizontale bzw. seitliche Verlagerung haben, um nebeneinander angeordnete Speicherplätze (10,11) bedienen zu können. In der Wechseleinrichtung (29) kann außerdem ein temporärer Zwischenspeicher für einen Bauteilträger (6) gebildet sein, um die Wechselzeiten, insbesondere an der Drehtischseite zu verkürzen.

Wie Figur 1 und 2 verdeutlichen, kann an einer Entladestelle (13) eine Entladeeinrichtung (24) für die Entnahme von Bauteilen (7) aus einem Bauteilträger (6) angeordnet sein. Ein Drehspeicher (5) kann eine oder mehrere Entladestellen (13) und ggf. auch ein oder mehrere Entladeeinrichtungen (24) aufweisen. Figur 1 zeigt eine Variante, bei der das Magazin (4) mehrere Drehspeicher (5) mit einer gemeinsamen Entladeeinrichtung (24) hat.

Eine Entladeeinrichtung (24) kann in beliebiger Weise konstruktiv ausgebildet sein. In den gezeigten und bevorzugten Ausführungsbeispielen wird ein mehrachsiger Industrieroboter (25) eingesetzt, der z.B. als Gelenkarmroboter mit fünf oder mehr Drehachsen ausgestaltet ist und der an seinem Abtriebselement ein Greifwerkzeug zum positionsgenauen Greifen eines Bauteils (7) aufweist. Das Greifwerkzeug kann ein Kombiwerkzeug und auf verschiedene Bauteile (7) adaptiert sein. Es kann ggf. vom Roboter (25) automatisch gewechselt werden, wobei in seinem Arbeitsbereich ein entsprechendes Magazin vorhanden ist.

Die Entladeeinrichtung (24), insbesondere der gezeigte mehrachsige Industrierroboter (25), kann eine zusätzliche Fahrachse (26) aufweisen, mit der die Distanz zwischen dem Drehspeicher (5) und der Übergabestelle an die Fertigungslinie (2) überbrückt werden kann. Das Magazin (4) kann einen Pufferspeicher (27) für die temporäre Aufnahme einzelner Bauteile (7) aufweisen. Der Pufferspeicher (27) ist an der Entladeeinrichtung (24) angeordnet und kann sich insbesondere an der Fahrachse (26) befinden. Er dient der Aufrechterhaltung des Bauteilflusse, falls die Wechselzeiten für einen Bauteilträger (6) längere Zeit beanspruchen. Dies gilt insbesondere, wenn für ein Bauteil (7) nur ein einziger Bauteilträger (6) im Magazin (4) vorhanden ist. Falls es mehrere mit gleichen Bauteilen (7) beladene Bauteilträger (6) im Magazin (4) gibt, kann der Pufferspeicher (27) entfallen, verkleinert werden oder ungenutzt bleiben.

Bei der in Figur 1 gezeigten Anordnung von beidseits einer gemeinsamen Entladeeinrichtung (24) angeordneten Drehspeichern (5), bei denen die Entladestellen (13) auch einander gegenüberliegen, ergeben sich gleiche Entnahme und Transportzeiten für die Entladeeinrichtung (24), insbesondere den Industrieroboter (25). Hierdurch wird die Anlagenplanung vereinfacht und die Auslastung verbessert, was insbesondere für den Industrieroboter (25) von Vorteil ist.

Der dritte Drehspeicher (5) kann eine eigene Entladeeinrichtung (24) der vorbeschriebenen Art haben. Ferner ist es möglich, dass ein oder mehrere Drehspeicher (5) mehrere und verteilt angeordnete Entladestellen (13) aufweisen, wobei die Entladeeinrichtung (24) mehrgliedrig ausgebildet ist und an mehreren Entladesstellen (13) eines Drehspeichers (5) gleichzeitig einen Entladeprozess durchführen kann.

Abwandlungen der gezeigten und beschriebenen Ausführungsformen sind in verschiedener Weise möglich, soweit sie den durch die Ansprüche definierten Schutzumfang der Erfindung nicht überschreiten. Die mobilen Bauteilträger (6) können an die Ausbildung eines Drehspeichers (5) adaptiert und Bestandteile des Magazins (4) sein.

### BEZUGSZEICHENLISTE

- 1: Fertigungsanlage
- 2: Fertigungslinie
- 3: Logistiksystem
- 4: Magazin
- 5: Drehspeicher
- 6: Bauteilträger, Rack
- 7: Bauteil, Karosserieteil
- 8: Drehtisch
- 9: Drehtisch
- 10: Speicherplatz
- 11: Speicherplatz
- 12: Beladestelle
- 13: Entladestelle
- 14: Drehachse
- 15: Trageinrichtung
- 16: Drehlager
- 17: Tragrahmen
- 18: Tischrand
- 19: Führungs- und Positioniereinrichtung
- 20: Positioniereinrichtung, Absteckung
- 21: Abstützung
- 22: Schutzabtrennung, Zaun
- 23: Zugang, Rolltor
- 24: Entladeeinrichtung
- 25: Industrieroboter
- 26: Fahrachse
- 27: Pufferspeicher
- 28: Beladeeinrichtung
- 29: Wechseleinrichtung
- 30: Hubeinrichtung
- 31: Verschiebeeinrichtung, Zusatzachse
- 32: Lademittel, Teleskopgabel
- 33: Fördermittel
- 34: Transportzug
- 35: Gabelstapler
- 36: Vorkommissionierung

## Patentansprüche

1. Magazin (4) für eine automatisierte Fertigungsanlage (1) mit mehreren mobilen Bauteilträgern (6), die jeweils zur positionierten Aufnahme von mehreren Bauteilen (7) ausgebildet sind, wobei das Magazin (4) einen Drehspeicher (5) mit zwei, drei oder mehr Drehtischen (8,9) aufweist, die mit Abstand übereinander angeordnet sind und jeweils am äußeren Tischrand (18) mehrere in Umfangsrichtung verteilt angeordnete Speicherplätze (10,11) für einen Bauteilträger (6) aufweisen, wobei ein Drehtisch (8,9) an seinen Speicherplätzen (10,11) jeweils eine Führungs- und Positioniereinrichtung (19) für einen Bauteilträger (6) aufweist, wobei
- das Magazin (4) für die Drehtische (8,9) jeweils eine Beladestelle (12) und eine Entladestelle (13) aufweist, die in Umfangsrichtung getrennt voneinander angeordnet sind, **dadurch gekennzeichnet, dass**
- die Drehtische (8,9) unabhängig voneinander drehbar gelagert und eigenständig gesteuert angetrieben sind, wobei
- ein Drehtisch (8,9) an einer Beladestelle (12) und/oder an einer Entladestelle (13) eine äußere randseitige vertikale steuerbare Abstützung (21) aufweist, die formschlüssig an einer entsprechenden Stelle des Drehtisches (8,9) angreift.

2. Magazin nach Anspruch 1, **dadurch gekennzeichnet, dass** die Drehtische (8,9) ringförmig ausgebildet sind und eine zentrale Trageinrichtung (15) mit einem Drehlager (16) aufweisen.

3. Magazin nach Anspruch 1 oder 2, **dadurch gekennzeichnet, dass** ein Drehtisch (8,9) unterschiedlich große Speicherplätze (10,11) aufweist.

4. Magazin nach einem der vorhergehenden Ansprüche, **dadurch gekennzeichnet, dass** an einer Beladestelle (12) eine Beladeeinrichtung (28) für Bauteilträger (6) dauerhaft oder temporär angeordnet ist.

5. Magazin nach Anspruch 4, **dadurch gekennzeichnet, dass** die Beladeeinrichtung (28) eine ortsgebundene Wechseleinrichtung (29) für Bauteilträger (6) mit einer Hubeinrichtung (30) und einem Lademittel (32) für Übernahme und Abgabe eines Bauteilträger (6) sowie ggf. eine Zusatzachse (31), insbesondere eine Verschiebeeinrichtung, oder einen Transportzug (34) aufweist.

6. Magazin nach Anspruch 4, **dadurch gekennzeichnet, dass** die Beladeeinrichtung (28) als Fördermittel (33) ausgebildet ist.

7. Magazin nach einem der vorhergehenden Ansprüche, **dadurch gekennzeichnet, dass** an einer Entladestelle (13) eine Entladeeinrichtung (24) für die Entnahme von Bauteilen (7) aus einem Bauteilträger (6) angeordnet ist.

8. Magazin nach Anspruch 7, **dadurch gekennzeichnet, dass** die Entladeeinrichtung (24) als mehrachsiger Industrieroboter (25) ausgebildet ist.

9. Magazin nach einem der vorhergehenden Ansprüche, **dadurch gekennzeichnet, dass** an einer Beladestelle (12) und/oder an einer Entladestelle (13) eine Positioniereinrichtung (20) für die Drehstellung angeordnet ist.

10. Magazin nach einem der vorhergehenden Ansprüche, **dadurch gekennzeichnet, dass** das Magazin (4) einen Pufferspeicher (27) an der Entladeeinrichtung (24) aufweist.

11. Logistiksystem für die Zuführung von Bauteilen (7), insbesondere Karosseriebauteilen, in einer automatisierten Fertigungsanlage (1), wobei das Logistiksystem (3) ein Magazin (4) mit mehreren Bauteilträgern (6) aufweist, die jeweils zur positionierten Aufnahme von mehreren Bauteilen (7) ausgebildet sind, **dadurch gekennzeichnet, dass** das Magazin (4) nach mindestens einem der Ansprüche 1 bis 10 ausgebildet ist.

12. Logistiksystem nach Anspruch 11, **dadurch gekennzeichnet, dass** das Logistiksystem (3) eine dem Magazin (4) vorgeschaltete Vorkommissionierung (36) für beladene Bauteilträger (6) aufweist.

13. Automatisierte Fertigungsanlage (1) für Werkstücke, insbesondere Fahrzeugkarosserien, mit einer Fertigungslinie (2) und einem Logistiksystem (3) für die Zuführung von Bauteilen (7), insbesondere Karosseriebauteilen, wobei das Logistiksystem (3) ein Magazin (4) mit mehreren Bauteilträgern (6) aufweist, die jeweils zur positionierten Aufnahme von mehreren Bauteilen (7) ausgebildet sind, **dadurch gekennzeichnet, dass** das Logistiksystem (3) nach Anspruch 11 oder 12 ausgebildet ist.

14. Verfahren zum Magazinieren von Bauteilen (7) in einem Magazin (4) nach einem der Ansprüche 1-10, wobei die Bauteilträger (6) an den Speicherplätzen (10,11) aufgenommen und mittels der Führungs- und Positioniereinrichtung (19) geführt und positioniert werden.

## Claims

1. Magazine (4) for an automated production plant (1), having a plurality of mobile component carriers (6), which are each designed for the positioned reception of a plurality of components (7), the magazine (4) having a rotary store (5) with two, three or more rotary tables (8, 9), which are arranged at a distance above one another and each have, at the outer table edge (18), a plurality of storage spaces (10, 11) arranged distributed in the circumferential direction for a component carrier (6), a rotary table (8, 9) in each case having in its storage spaces (10, 11) a guiding and positioning device (19) for a component carrier (6),
- the magazine (4) for the rotary tables (8, 9) in each case having a loading point (12) and an unloading point (13), which are arranged separated from one another in the circumferential direction,
**characterized in that**
- the rotary tables (8, 9) are rotatably mounted independently of one another and are independently driven under control, wherein
- a rotary table (8) at a loading point (12) and/or at an unloading point (13) has an outer vertical controllable support (21) at its edge, which acts in a form-fitting manner on a corresponding point of the rotary table (8, 9).

2. Magazine according to Claim 1, **characterized in that** the rotary tables (8, 9) are formed in the manner of rings and have a central carrying device (15) with a rotary bearing (16).

3. Magazine according to Claim 1 or 2, **characterized in that** a rotary table (8, 9) has storage spaces (10, 11) of different sizes.

4. Magazine according to one of the preceding claims, **characterized in that** a loading device (28) for component carriers (6) is arranged permanently or temporarily at a loading point (12).

5. Magazine according to Claim 4, **characterized in that** the loading device (28) has a stationary changing device (29) for component carriers (6), comprising a lifting device (30) and a loading means (32) for accepting and discharging a component carrier (6) and also, if appropriate, an additional axis (31), in particular a displacement device, or a transport train (34).

6. Magazine according to Claim 4, **characterized in that** the loading device (28) is formed as a conveying means (33).

7. Magazine according to one of the preceding claims, **characterized in that** an unloading device (24) for the removal of components (7) from a component carrier (6) is arranged at an unloading point (13).

8. Magazine according to Claim 7, **characterized in that** the unloading device (24) is formed as a multi-axis industrial robot (25).

9. Magazine according to one of the preceding claims, **characterized in that** a positioning device (20) for the rotational position is arranged at a loading point (12) and/or at an unloading point (13).

10. Magazine according to one of the preceding claims, **characterized in that** the magazine (4) has a buffer store (27) on the unloading device (24).

11. Logistic system for supplying components (7), in particular body components, in an automated production plant (1), the logistic system (3) having a magazine (4) with a plurality of component carriers (6), which are each designed for the positioned reception of a plurality of components (7), **characterized in that** the magazine (4) is constructed in accordance with at least one of Claims 1 to 10.

12. Logistic system according to Claim 11, **characterized in that** the logistic system (3) has a prior picking system (36) for loaded component carriers (6) upstream of the magazine (4).

13. Automated production plant (1) for workpieces, in particular vehicle bodies, comprising a production line (2) and a logistic system (3) for supplying components (7), in particular body components, the logistic system (3) having a magazine (4) comprising a plurality of component carriers (6), which are each designed for the positioned reception of a plurality of components (7), **characterized in that** the logistic system (3) is constructed in accordance with Claim 11 or 12.

14. Method for storing components (7) in a magazine (4) according to one of Claims 1-10, wherein the component carriers (6) are received at the storage spaces (10, 11) and guided and positioned by means of the guiding and positioning device (19).

## Revendications

1. Magasin (4) pour une installation de production automatisée (1) avec plusieurs supports de composants mobiles (6), qui sont configurés respectivement pour la réception positionnée de plusieurs composants (7), dans lequel le magasin (4) présente un accumulateur rotatif (5) avec deux, trois tables tournantes (8, 9) ou plus, qui sont disposées à distance l'une au-dessus de l'autre et présentent respectivement sur le bord extérieur (18) de la table plusieurs emplacements de stockage (10, 11) répartis en direction périphérique pour un support de composants (6), dans lequel une table tournante (8, 9) présente à ses emplacements de stockage (10, 11) respectivement un dispositif de guidage et de positionnement (19) pour un support de composants (6), dans lequel
- le magasin (4) présente pour la table tournante (8, 9) respectivement un poste de chargement (12) et un poste de déchargement (13), qui sont disposés de façon séparée l'un de l'autre en direction périphérique,
**caractérisé en ce que**
- les tables tournantes (8, 9) sont montées de façon rotative indépendamment l'une de l'autre et sont commandées de façon autonome, dans lequel
- une table tournante (8, 9) présente à un poste chargement (12) et/ou à un poste de déchargement (13) un appui extérieur périphérique vertical réglable (21), qui s'engage par emboîtement avec un point correspondant de la table tournante (8, 9).

2. Magasin selon la revendication 1, **caractérisé en ce que** les tables tournantes ((8, 9) sont de forme annulaire et présentent un dispositif de support central (15) avec un pivot (16).

3. Magasin selon la revendication 1 ou 2, **caractérisé en ce qu'**une table tournante (8, 9) présente des emplacements de stockage (10, 11) de différentes grandeurs.

4. Magasin selon l'une quelconque des revendications précédentes, **caractérisé en ce qu'**un dispositif de chargement (28) pour des supports de composants (6) est installé de façon permanente ou temporaire à un poste de chargement (12).

5. Magasin selon la revendication 4, **caractérisé en ce que** le dispositif de chargement (28) présente un dispositif d'échange sédentaire (29) pour des supports de composants (6) avec un dispositif de levage (30) et un moyen de chargement (32) pour reprendre et céder un support de composants (6), ainsi qu'éventuellement un axe supplémentaire (31), en particulier un dispositif de déplacement, ou un train de transport (34).

6. Magasin selon la revendication 4, **caractérisé en ce que** le dispositif de chargement (28) est réalisé sous forme de moyens de transport (33).

7. Magasin selon l'une quelconque des revendications précédentes, **caractérisé en ce qu'**un dispositif de déchargement (24) est disposé à un poste de déchargement (13) pour le prélèvement de composants (7) hors d'un support de composants (6).

8. Magasin selon la revendication 7, **caractérisé en ce que** le dispositif de déchargement (24) est réalisé sous forme de robot industriel à plusieurs axes (25).

9. Magasin selon l'une quelconque des revendications précédentes, **caractérisé en ce qu'**un dispositif de positionnement (20) est disposé à un poste de chargement (12) et/ou à un poste de déchargement (13) pour la position rotative.

10. Magasin selon l'une quelconque des revendications précédentes, **caractérisé en ce que** le magasin (4) présente un accumulateur tampon (27) sur le dispositif de déchargement (24).

11. Système logistique pour la fourniture de composants (7), en particulier de composants de carrosserie, dans une installation de production automatisée (1), dans lequel le système logistique (3) présente un magasin (4) avec plusieurs supports de composants (6), qui sont configurés respectivement pour la réception positionnée de plusieurs composants (7), **caractérisé en ce que** le magasin (4) est réalisé selon au moins une des revendications 1 à 10.

12. Système logistique selon la revendication 11, **caractérisé en ce que** le système logistique (3) présente une zone de préparation des marchandises (36) en amont du magasin (4) pour des supports de composants chargés (6).

13. Installation de production automatisée (1) pour des pièces, en particulier des carrosseries de véhicules, avec une ligne de production (2) et un système logistique (3) pour la fourniture de composants (7), en particulier de composants de carrosseries, dans laquelle le système logistique (3) présente un magasin (4) avec plusieurs supports de composants (6), qui sont configurés respectivement pour la réception positionnée de plusieurs composants (7), **caractérisée en ce que** le système logistique (3) est réalisé selon la revendication 11 ou 12.

14. Procédé d'emmagasinage de composants (7) dans un magasin (4) selon l'une quelconque des revendications 1 à 10, dans lequel on dépose les supports de composants (6) sur les emplacements de stockage (10, 11) et on les guide et on les positionne au moyen du dispositif de guidage et de positionnement (19).
